# EUROPÄISCHE PATENTANMELDUNG

(11) **EP 0 566 898 A2**
(43) Veröffentlichungstag der Anmeldung: **27.10.1993**
(21) Anmeldenummer: 93105065.2
(22) Anmeldetag: 26.03.1993
(51) Int. Cl.: B23B 31/20

(54) **Spannfutter für Werkzeugmaschinen**

(30) Priorität: 27.03.1992 DE 4209999
(71) Anmelder: Schmidt, Claus, D-74321 Bietigheim-Bissingen (DE)
(72) Erfinder: Schmidt, Claus, D-74321 Bietigheim-Bissingen (DE)
(74) Vertreter: Frank, Gerhard, Dipl.-Phys.

(57) **Zusammenfassung**

Bei einem Spannfutter ist ein Futterkörper vorgesehen, der gegenüber der Längsachse (a-a) des Spannfutters geneigte Führungsflächen (12) besitzt. An den Führungsflächen sind durch eine Konusspannung Segmente radial verschiebbar, die gemeinsam über Gegenführungsflächen (15b) mit den Führungsflächen (12) des Futterkörpers zusammenarbeiten. Im Spannkopf (15) ist ein abnehmbarer Spanneinsatz (18) vorgesehen, der mit diesem zur Spannbewegung formschlüssig verbunden ist und seinerseits über radial verschiebbare und miteinander elastisch verbundene Spannsegmente verfügt, die mit den Segmenten des Spannkopfes in Verbindung stehen, wodurch ein einfaches und schnelles Umrüsten des Spannfutters ermöglicht wird ohne daß ein Verlust an Präzision eintritt.

## Beschreibung

Die Erfindung betrifft ein Spannfutter für Werkzeugmaschinen nach dem Oberbegriff des Anspruches 1.

Aus der gattungsbildenden DE-PS 39 37 570 ist ein Spannfutter bekannt, bei dem ein Spannkopf mit einem Zugstück durch einen schnell lösbaren Bajonettverschluß formschlüssig verbindbar ist. Das Spannfutter besitzt Spannbacken, die bis in die Frontfläche des Spannkopfkörpers reichen und eine Bearbeitung bis zur Einspannstelle ermöglichen. Die Spannbacken sind radial am Spannkopfkörper geführt, so daß ein präzises Einspannen eines Werkstückes ermöglicht wird.

Aus der DE-OS 36 29 722 ist ein Spannfutter mit auswechselbar an einem Futterkörper angeordneten Spannbacken bekannt, das Kupplungselemente zum Verbinden der Spannbacken mit dem Futterkörper aufweist. Es besitzt keinen die Spannbacken aufnehmenden Spannkopfkörper, so daß eine entsprechend präzise Führung nicht möglich ist.

Aus z.B. der DE-PS 829 397 sind Einspannvorrichtungen bekannt, die aus einer Mehrzahl um eine Achse verteilter, in der Hauptachse radial gerichteter harter Backen bestehen, die in einem Körper aus elastischem, vorzugsweise gummielastischem Material eingebettet sind, das die Backen verbindet und die Innen- und und Außenseiten der Backen freiläßt. Durch eine Konusspannung werden dann die Backen radial gegen die Kräfte des elastischen Materials nach innen verschoben. Auch hier kann eine entsprechende radiale Führung der Spannbacken nicht gewährleistet werden.

Aus der DE-PS 28 31 140 ist eine Wechselvorrichtung für eine Spannzange bekannt, bei der elastisch miteinander verbundene Spannbacken von einem Zugstück abgekoppelt werden. In stirnseitige Ausnehmungen der Spannbacken greifen Betätigungsbolzen ein, die über Schwenklager radial nach innen geschwenkt werden, so daß die Wirkverbindung zwischen den Rastnasen der Spannbacken und den Rastungen des Zugstückes aufgehoben wird. Im einzelnen besteht die Wechselvorrichtung aus einem Gewindebolzen und einer Mutter, die an einem Lagerstück gelagert sind, wobei beim Anziehen der Mutter die Schraube radial gegen einen Lagerblock geführt wird, so daß die Schwenkbewegung ausgelöst wird.

Ausgehend von dem genannten Stand der Technik liegt der Erfindung die Aufgabe zugrunde, ein Spannfutter der eingangs genannten Gattung derart weiterzubilden, daß ein einfaches und schnelles Umrüsten des Spannfutters ermöglicht wird, ohne daß infolge des Wechsels ein Verlust an Präzision eintritt.

Diese Aufgabe wird durch ein Spannfutter mit den im Anspruch 1 angegebenen Merkmalen gelöst. Als Mantelfläche im Sinne des Anspruches 1 ist dabei die in Spannposition bestehende Berührungsfläche zwischen Druck- und Spannbacken zu verstehen, wobei gleichgültig ist, ob diese Fläche im Querschnitt kreisförmig ist oder einen Polygonzug darstellt oder zwischen den Backen abgesetzt ist.

Ein solches Spannfutter verbindet die Vorteile eines herkömmlichen Spannfutters mit den Vorteilen eines Spannfutters, dessen Spannbacken elastisch miteinander verbunden sind. Der Spannkopf gewährleistet eine entsprechende Präzision, insbesondere hinsichtlich der Lagegenauigkeit des einzuspannenden Werkstückes, und die elastisch miteinander verbundenen Spannbacken des Spanneinsatzes gewährleisten ein einfaches und schnelles Umrüsten. Die Druckbacken können durchaus auf Dauer mit der Zugeinrichtung in Verbindung stehen, während der Spanneinsatz je nach Größe des einzuspannenden Werkstückes ausgetauscht wird, ohne daß aufwendige Umbauarbeiten erforderlich sind, da der Spanneinsatz für sich mittels der weiter unten noch zu beschreibenden Wechselvorrichtung nach vorn aus dem Spannfutter entnehmbar ist.

Um die Wirksamkeit der Vorrichtung zu gewährleisten, muß nur der Spanneinsatz gegenüber der Längsachse des Spannfutters einen kleineren Winkel aufweisen als der Winkel, den der Aufnahmekegel für den Spannkopf besitzt. Der Spanneinsatz ist sogar in entgegengesetzter Richtung zum Winkel der Führungsflächen kegelstumpfförmig auszubilden, wobei die Wechselvorrichtung dann so ausgestaltet sein muß, daß der Spanneinsatz so weit zusammengedrückt werden kann, daß er in Arbeitsstellung überführt werden kann.

Vorzugsweise wird der Spanneinsatz zylindrisch ausgebildet, was die Fertigungskosten senkt, da die Herstellung einer zylindrischen Oberfläche weniger Aufwand erfordert, als die Herstellung einer kegelförmigen Mantelfläche. Dies wirkt sich aber auch hinsichtlich der Präzision des gesamten Spannfutters aus, da Kegeloberflächen nur mit Mühe so genau zu bearbeiten sind, daß nicht Abweichungen zumindest im 1/100stel Millimeterbereich auftreten.

Gleichgültig, wie die Oberfläche ausgebildet ist, so gewährleistet diese Ausbildung immer, daß die Druckbacken des Spannkopfes und die Spannbacken des Spanneinsatzes einer Parallelverschiebung unterworfen sind, so daß die Anlage zwischen Spann- und Druckbacken gleich bleibt. Dies kann bei herkömmlichen Spannfuttern aufgrund der Bearbeitungsungenauigkeiten, insbesondere der Führungsflächen des Futterkörpers nicht gewährleistet werden.

Die Präzision kann dadurch verbessert werden, daß die Druckbacken und die Spannbacken in einem Zugstück radial geführt werden, so daß es weder zum Abkippen, noch zum Wandern der Spannbacken kommt. Dies macht sich in der Lagegenauigkeit des einzuspannenden Werkstückes als auch bei der Bearbeitung der Werkstücke bemerkbar.

Nach Anspruch 3 werden die Spannbacken nicht nur im Übergangsbereich zwischen Druckbacke und Spannbacke, sondern auch bis in einen radial weiter innen liegenden Bereich der Spannbacke sehr präzise geführt. Die Führung erfolgt entlang zweier Linien, so daß eine ebene Führung erreicht ist, die eine erhöhte Präzision bei der Werkstückbearbeitung ermöglicht.

Bei einer Ausbildung nach Anspruch 4 ist ein Einspannen des Werkstückes bis zur Frontfläche des Spannkopfkörpers möglich. Werkstücke können daher bis zur Einspannstelle bearbeitet werden, und eine präzisere Bearbeitung, insbesondere bei kurzen Werkstücken aufgrund der größeren Stabilität der Einspannung ist möglich.

Dem Nachteil, daß aufgrund der nach vorne reichenden Spannbacken größere Möglichkeiten für Verschmutzungen des Spannfuttermechanismus bestehen, wird wirksam begegnet, indem bei Ausbildungen nach den Ansprüchen 6 und 8 Dichtungsmechanismen vorgesehen werden, die das Eindringen von Schmutz- und Staubpartikeln verhindern.

Ein Wechseln des Spanneinsatzes erfolgt mit Wechselvorrichtungen nach den Ansprüchen 10-15, die bei Betätigung die Spannbacken parallel nach innen verschieben, so daß ein Abkuppeln möglich ist. Die Parallelverschiebung hat den Vorteil, daß es zu keinen punktuellen Überbeanspruchungen im Frontbereich kommt, da die Spannbacke nicht mehr an einem Punkt abgestützt werden muß. Das Spannfutter kann nach Anspruch 15 durch eine Wechselvorrichtung gewechselt werden, die nicht die Betätigungsglieder radial nach innen verschiebt, da über entsprechende Schrägflächen eine axiale Bewegung der Betätigungsglieder in eine radiale Bewegung der Spannbacken umgesetzt wird.

Nach Anspruch 16 kann die Wechselvorrichtung an eine Zange angekopppelt werden, bei der die Zangenbewegung in eine axiale Bewegung und über Schrägflächen in eine nach innengerichtete Bewegung umgesetzt wird, so daß eine leichte Einhandbedienung möglich ist.

Nach Anspruch 17 und 18 kann aber auch die Betätigungseinrichtung selbst den Wechselvorgang dadurch einleiten, daß sie bis zu einem Anschlag die Spannbacken nach innen bewegt. In dieser Stellung kann sogar ein starres Element an den Spanneinsatz angekopplt werden, der die Spannbacken in dieser Stellung fixiert, so daß nach Rückstellung der Betätigungseinrichtung der Spanneinsatz entnommen werden kann.

Bei einer Ausbildung nach den Ansprüchen 19 und 20 wird der Umbau eines Durchgangsfutters in ein Anschlagfutter dadurch erleichtert, daß der Futterkörper am Spindelkopf verbleibt, wodurch das zeitaufwendige, mit Fühlerlehren durchgeführte frische Einjustieren des Futterkörpers am Spindelkopf entfällt.

Weitere vorteilhafte Ausbildungen ergeben sich aus den Unteransprüchen. Auf den Zeichnungen sind Ausführungsbeispiele des erfindungsgemäßen Spannfutters dargestellt. Es zeigen:
- Fig. 1: einen Längsschnitt durch das in Arbeitsstellung befindliche Spannfutter gemäß der Schnittlinie I-I in Fig. 2,
- Fig. 2: eine Stirnansicht des Spannfutters in einer Darstellung gemäß Fig. 1,
- Fig. 3, 3a: eine perspektivische Darstellung des Spanneinsatzes in verschiedenen Ausführungsbeispielen`
- Fig. 4: eine Stirnansicht gemäß Fig. 2 bei abgenommenem Spanneinsatz,
- Fig. 5, 6: einen Schnitt durch eine Hälfte des Spannfutters im Bereich des stirnseitig austretenden Zugstückes 14,
- Fig. 7: das Spannfutter in einer Darstellung gemäß Fig. 1 mit zugehöriger Wechselvorrichtung,
- Fig. 8: eine Stirnansicht der Wechselvorrichtung,
- Fig. 9: eine teilweise geschnittene Seitenansicht einer Wechselvorrichtung gemäß einem zweiten Ausführungsbeispiel
- Fig. 10: einen Schnitt im Bereich eines Betätigungsgliedes in Umfangsrichtung der Wechselvorrichtung,
- Fig. 11: eine Stirnansicht einer Wechselvorrichtung gemäß Fig. 9,
- Fig. 12: eine Seitenansicht einer Wechselvorrichtung gemäß einem dritten Ausführungsbeispiel in einer Darstellung gemäß Fig. 9,
- Fig. 13: einen Ausschnitt aus der Wechselvorrichtung gemäß Fig. 12 im Bereich eines Führungselements 236,
- Fig. 14: eine Stirnansicht einer Wechselvorrichtung gemaß Fig. 12,
- Fig. 15: die mit der Wechselvorrichtung verbundene Zange,
- Fig. 16, 17: den von der Betätigungsvorrichtung ausgelösten Wechselvorgang,
- Fig. 18: eine Ansicht des Spannfutters gemäß Fig. 1, das zu einem Anschlagfutter umgebaut ist.

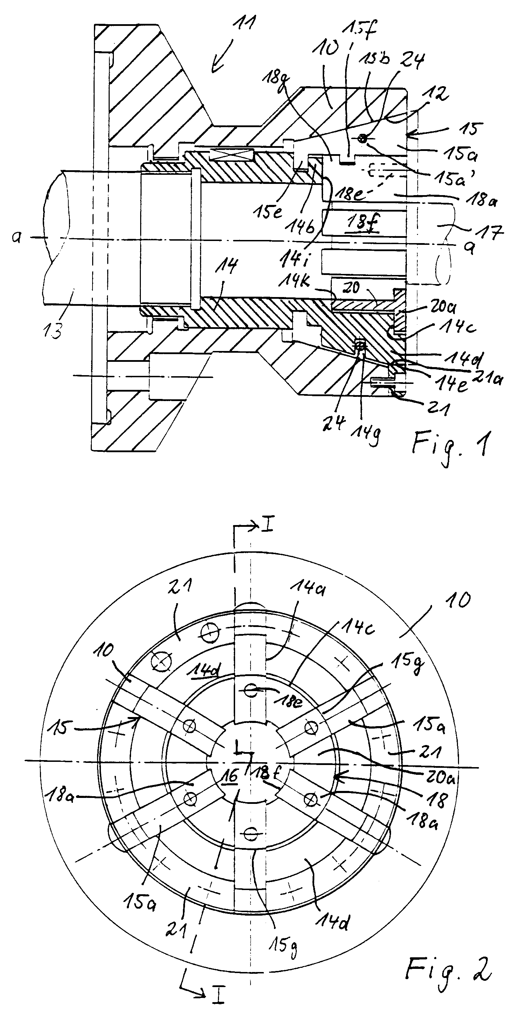

Das dargestellte Spannfutter für Werkzeugmaschinen besitzt einen Futterkörper 10 mit gegenüber der Längsachse a-a des Spannfutters 11 um einen gewissen Winkel geneigten Führungsflächen 12. Die Führungsflächen liegen auf der Oberfläche eines Kegelstumpfes, der für die Aufnahme eines mit einer als Zugeinrichtung 13 ausgebildeten Betätigungseinrichtung zusammenarbeitenden Spannkopfes vorgesehen ist. Das Spannfutter kann jedoch auch als Schubfutter eingesetzt werden. Die Führungsflächen, die den im folgenden als Druckbacken 15a bezeichneten, radial verschiebbaren Segmenten als Führung dienen, können auch als Aufnahmenuten in der Oberfläche des Kegelstumpfes ausgebildet werden. Die Druckbacken 15a sind dem Spannkopf 15 zugeordnet und zumindest über ein Zugstück 14 oder über den Federring 24 verbunden. Sie arbeiten über Gegenführungsflächen 15b mit den Führungsflächen 12 des Futterkörpers 10 zusammen (Fig. 1). Wird durch die Zugeinrichtung am Spannkopf gezogen, so gleiten die Druckbacken 15a an den geneigten Führungsflächen radial nach innen und üben infolge einer Konusspannung eine Spannwirkung auf ein in einer axialen Aufnahmeöffnung 16 eingespanntes Werkstück 17 aus.

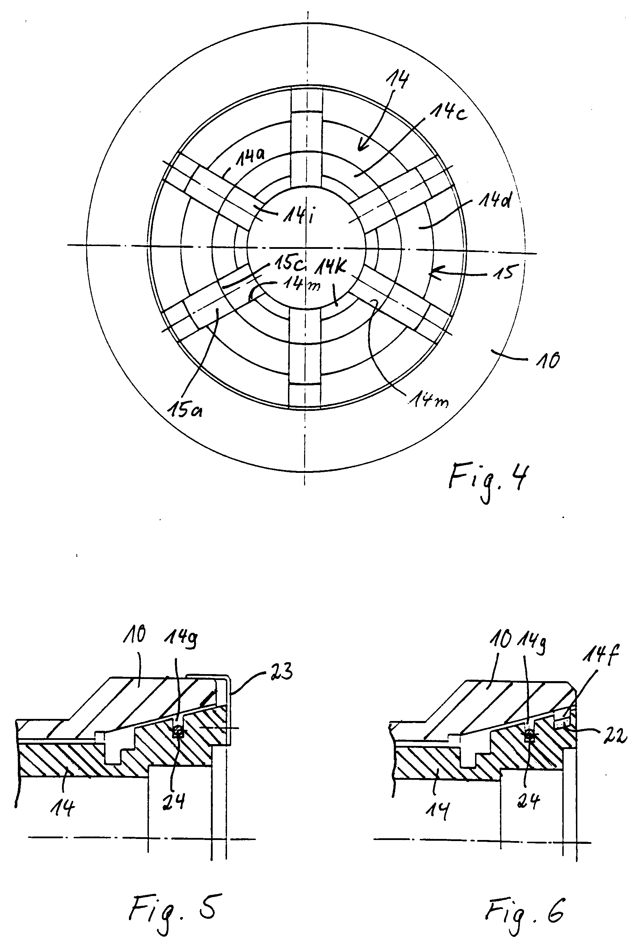

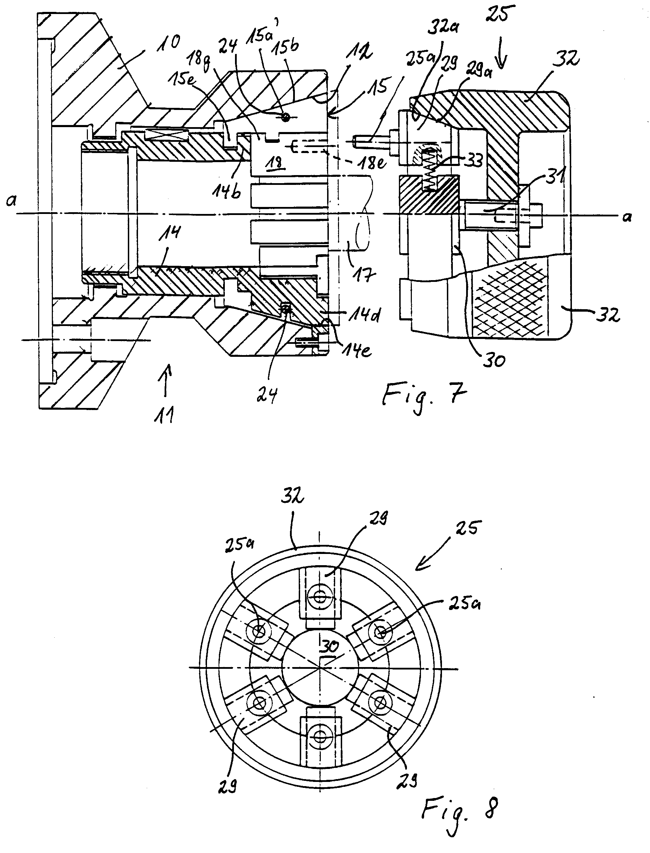

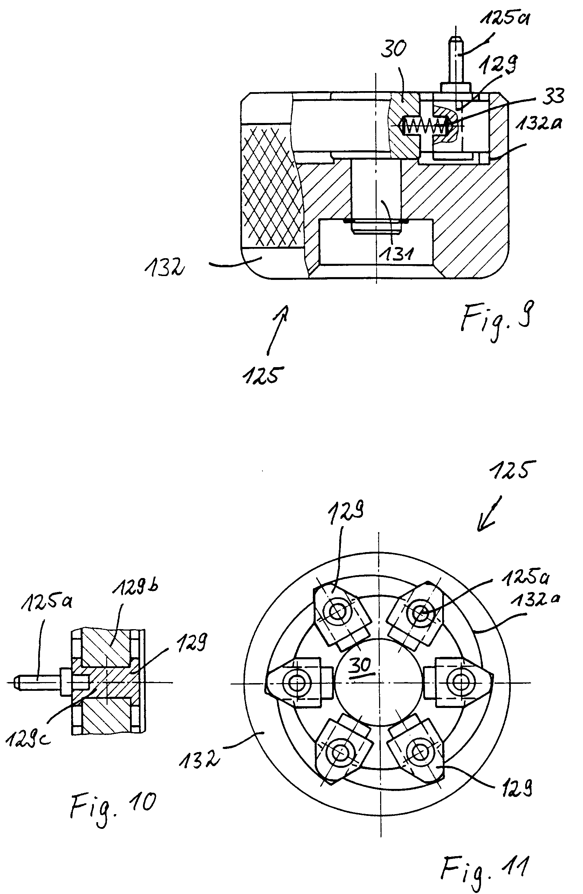

Die Fign. 2 und 4 lassen erkennen, daß der radiale Querschnitt der Druckbacken 15a annähernd rechteckförmig ist und daß die Gegenführungsflächen 15b und die Druckflächen 15g konvex bzw. konkav ausgebildet sind. Die Flächen können auch geradlinig oder gezackt ausgebildet werden.

Der Spannkopf 15 besitzt konzentrisch zur Längsachse a-a des Futterkörpers einen abnehmbaren Spanneinsatz 18, 118. Dieser Spanneinsatz ist zur Spannbewegung formschlüssig mit dem Spannkopf 15 verbunden und verfügt über radial verschiebbare Spannsegmente, die im folgenden als Spannbacken 18a,118a bezeichnet werden und untereinander durch elastische, vorzugsweise gummielastische Materialien verbunden sind. In Fig. 1 stehen die Spannbacken 18a,118a an der äußeren Mantelfläche 18b,118b des Spanneinsatzes 18,118 mit den Druckbacken des Spannkopfes 15 in Verbindung.

Nach den Fign. 2 und 4 sind die Spannbacken 18a grundsätzlich rechteckförmig und an ihrer äußeren Mantelfläche 18b konvex ausgebildet. Die Innenfläche 18f,118f ist für das Einspannen des Werkstückes 17 konkav ausgebildet. Die dargestellte Ausführungsform legt die Segmente jedoch nicht auf ihren Querschnitt und die Mantelfläche 18b und die Innenfläche 18f nicht auf ihre Form fest. Die Spannbacken 18a,118a als auch die Druckbacken 15a können die Form beliebiger Kreissegmente einnehmen, wodurch beim Spanneinsatz die Verwendung des gummielastischen Materials auf ein Minimum reduziert wird und bedarfsweise die Präzision durch einen erhöhten Kostenaufwand am Spanneinsatz erhöht werden kann.

Zeichnerisch nicht dargestellt ist auch die Möglichkeit, daß die Mantelfläche 18b,118b des Spanneinsatzes gegenüber der Längsachse a-a einen Winkel einschließt. Der Winkel kann sowohl kleiner sein als der Winkel, den die Führungsflächen gegenüber der Längsachse a-a einschließen, als auch ein entgegengesetzter Winkel sein. Im Ausführungsbeispiel besitzt der Spanneinsatz eine zylindrische Mantelfläche, deren Radius geringfügig kleiner ist als die zylindrische innere Mantelfläche 15c des Spannkopfes 15. Jedoch sind andere geometrische Formen möglich.

Wie in Fig. 1 aus einem Vergleich der oberen und unteren Hälfte des Spannfutters als auch aus Fig. 4 ersichtlich, sind sowohl die Druckbacken als auch die Spannbacken in axialen Ausnehmungen 14a des mit der Zugeinrichtung 13 in Verbindung stehenden Zugstückes radial geführt. Die Herstellung dieser axialen Ausnehmungen erfolgt z.B. dadurch, daß ein Durchfräsen mit anschließender Endbehandlung in Tiefe der Spannbacken bzw. der Druckbacken erfolgt. Ein Auseinanderfallen des so zergliederten Vorderteils 14d des Zugstückes wird dadurch vermieden, daß im Bereich der Verschlußnasen 14b Materialbrücken stehenbleiben, die für eine ausreichende Verbindung sorgen.

Nach Fig. 1 reicht das Zugstück 14 mit seinem Vorderteil 14d bis zur Stirnseite des Spannfutters. Auch die axialen Ausnehmungen 14a mit den darin geführten Druck- und Spannbacken reichen in diesen Bereich, was eine Bearbeitung bis zur Einspannstelle ermöglicht. Die Ausgestaltung der Spannbacke verhindert ein Kippen, wie dies bei bekannten Spannzangen dadurch auftritt, daß kein vollflächiges Einspannen der radial außen liegenden Fläche der Druck- bzw. Spannbacken möglich ist. Bei bekannten Spannzangen ist dies unmöglich, da der Krafteinleitungspunkt für die Spannkraft am vordersten Einspannpunkt außerhalb der Druckbacken 15a liegt. Im Bereich des Spanneinsatzes 18,118 reichen die Verbindungsbereiche 18d,118d zwischen Spannbacke 18a,118a und Verbindungselement 20 bis an die Stirnseite. Zwischen der Ausnehmung 14c und der Stoßkante 14k für das elastische Verbindungselement wird die Spannbacke 18a,118a in Umfangsrichtung vom Zugstück 14 geführt. Auch sind die Spannbacken 18a,118a in einem radial sich nach innen erstreckenden Bereich in Umfangsrichtung geführt, der sich hinter den Verbindungselementen 20 anschließt. Dieser Bereich ist in Fig.1 bei einem Vergleich der oberen mit der unteren Hälfte der Zeichnung zu erkennen. Die Spannbacken reichen axial weiter in den Futterkörper 10 hinein als die Verbindungselemente, so daß sie am Zugstück 14 geführt sind. Daher liegt die Stoßkante 14i für die Spannbacke 18a,118a witer im Innern des Futterkörpers 10 als die Stoßkante 14k für die Verbindungselemente 20. Über die lineare Führung an den Führungsflächen 18k,118k wird eine präzisere ebene Führung zusätzlich an den Führungsflächen 18m, 118m aufgrund der vergrößerten Anlagefläche am Zugstück 14 an der radialen Ausnehmung 14m erreicht.

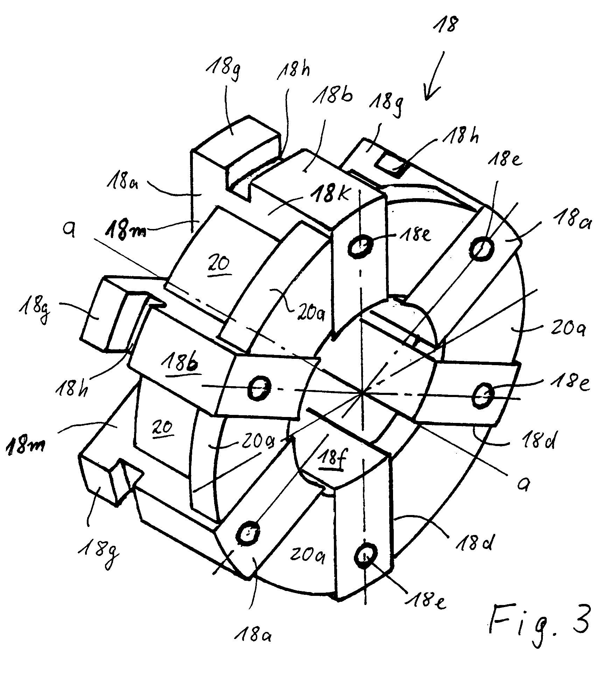

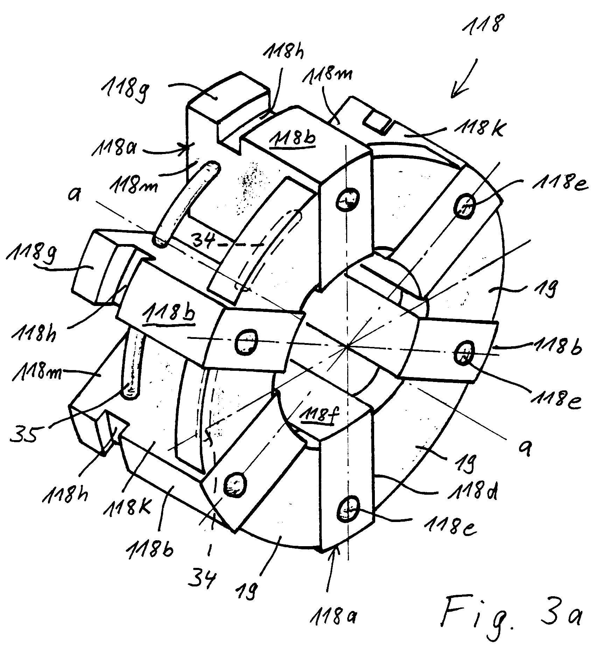

Die Fig. 1 macht auch die Verbindung von Druckbacken 15a, Spannbacken 18a und Zugstück 14 deutlich. Wie im oberen Teil der Fig. zu erkennen ist, besitzt die Spannbacke zwei Vorsprünge 15e, 15f, die für die Verbindung mit dem Zugstück 14 bzw. mit der Spannbacke 18 vorgesehen sind. Mit dem Vorsprung 15e taucht die Druckbacke 15a des Spannkopfes in eine Ausnehmung des Zugstückes hinter einer radial nach außen ragenden Verschlußnase des Zugstückes 14 radial nach innen ein. Mit einer Stoßkante 14i stößt im Bereich der Verschlußnase 14b das Zugstück 14 an die Spannbacke 18a. Die Spannbacke besitzt (Fign. 3,3a) eine Nut 18h, 118h, die in Arbeitsstellung mit dem Vorsprung 15f in Verbindung steht, und einen Vorsprung 18g,118g, der in Arbeitsstellung den Vorsprung 15f hintergreift. Andere Ausbildungen sind denkbar. Z.B. kann die Anordnung der Nuten und Vorsprünge vertauscht werden, oder es können Stifte vorgesehen werden, die in korrespondierende Bohrungen eintauchen. Statt Nasen oder Nuten können durchgehende Radialflansche oder Ringnuten oder Verzahnungsrillen oder gar eine nicht radial gerichtete Verbindung vorgesehen werden.

Da Druck- und Spannbacken bis an die Vorderseite des Spannfutters reichen, sollte durch diverse Dichtungsmaßnahmen ein Eindringen von Schmutz- und Staubpartikeln vermieden werden. Dazu weisen die zwischen den Spannbacken 18a angeordneten elastischen Verbindungselemente 20 einen stirnseitigen Dichtungsflansch 2Oa auf, der den Spalt zwischen Spanneinsatz 18 und Zugstück 14 überdeckt. Der Dichtflansch ist dazu am Zugstück 14 in einer Ausnehmung 14c aufgenommen.

Zudem ist außen in Fig. 1 z.B. eine Dichtungsform dargestellt, die durch zylindrisch gegenüberliegende Flächen abdichtet. Die Abdichtung 21 liegt über eine zylindrische Innenfläche 21a an zylindrischen Endabschnitten 14e des Vorderteils 14d des Zugstückes 14 an. In den Fign. 5 und 6 sind weitere Dichtungsmöglichkeiten dargestellt. In Fig. 5 übergreift eine Dichtungskappe 23 die Stirnseite des Spannfutters vorzugsweise bis an den Dichtflansch 20a des Spanneinsatzes 18 heran. Die Dichtungskappe ist mit dem Zugstück verbunden und gleitet bei der Spannbewegung auf der Außenseite des Futterkörpers 10. In Fig. 6 wird das Zugteil mit einer Ausnehmung 14f versehen, die für die Aufnahme eines Dichtsegments 22 vorgesehen ist, das zwischen je zwei Druckbacken 15a angeordnet ist.

Fig. 4 zeigt den aus dem Spannfutter herausgenommenen Spanneinsatz 18. So herausgenommen neigen die Druckbacken aufgrund der Schwerkraft dazu, aus den axialen Ausnehmungen 14a herauszufallen. Um dies zu vermeiden, können elastische Elemente vorgesehen werden, wie sie z.B. aus dem Stand der Technik in Form von anvulkanisierten Elementen bekannt sind. Es kann auch, wie aus den Fign. 1,5 und 6 ersichtlich, ein Federing 24 im Bereich des Spannkopfes 15 vorgesehen werden. Der Federring 24 durchgreift bevorzugt die Druckbacken 15a in Bohrung 15a' und liegt dort, wo er das Vorderteil 14d des Zugstückes berührt, in einer entsprechenden Ausnehmung 14g. Der Ring kann entweder geschlossen oder an wenigstens einer Stelle überlappend ausgebildet sein, um für die Bewegung das benötigte Material zur Verfügung zu stellen.

Eine zweite Ausführungsform des Spanneinsatzes ist in Fig. 3a dargestellt, wobei die Bezugszeichen gegenüber den Bezugszeichen der Fig. 3 und des ersten Ausführungsbeispieles jeweils um 100 erhöht sind. Bei diesem Spanneinsatz sind die Spannbacken 118a an wenigstens einem, vorzugsweise an zwei Punkten miteinander verbunden. Diese Verbindung erfolgt durch elastische Federelemente, die vorzugsweise metallisch ausgebildet sind. Die einzelnen Spannbacken 118a werden von den Federelementen 34, 35 durchgriffen und an ihnen durch entsprechende Verformungen dieser metallischen Federelemente festgehalten. Stirnseitig verfügt der Spanneinsatz zwischen den einzelnen Spannelementen über Dichtsegmente 19, die an den Spannbacken 118b z.B. in Nuten der Spannbacken gehalten sind. Dadurch können die Dichtsegmente 19 metallisch ausgebildet sein, so daß sie gegenüber heißen Spänen besser geschützt sind als die üblichen Gummielemente, die z.B. beim ersten Ausführungsbeispiel eingesetzt werden. Durch einen derartigen rein metallischen Spanneinsatz wird die Präzision weiter gesteigert auch in Verbindung mit der bereits hinsichtlich des Spanneinsatzes 18 beschriebenen flächigen Führung an den Führungsflächen 118m, 118k. Anstelle der beschriebenen beiden Möglichkeiten für eine elastische Verbindung sind noch weitere Ausbildungsformen möglich, die z.B. auf dem Kunststoffsektor zu suchen sind.

Wie insbesondere aus den Fign. 7 bis 14 ersichtlich, sind zum Lösen des Spanneinsatzes 18, 118 Wechselvorrichtungen 25,125,225 vorgesehen. Den Wechselvorrichtungen ist dabei gemeinsam, daß der zurückgelegte Weg multipliziert mit dem Tangens des Winkels am Futterkörper größer ist als der Kupplungsweg k. Die Spannbacken 18a,118a des Spanneinsatzes besitzen dazu als Sacklöcher ausgebildete Bohrungen 18e,118e, die stirnseitig offen sind und für die Aufnahme von Betätigungsgliedern 25a,125a,225a der Wechselvorrichtung vorgesehen sind. Durch die Wechselvorrichtung werden die Spannbacken 18a, 118a des Spanneinsatzes 18, 118 gegen die Kraft von elastischen Verbindungselementen parallel zur Längsachse a-a bewegt. Durch die Parallelverschiebung werden Materialermüdungen und auf lange Sicht ein Verlust an Präzision vermieden. Sowohl die Bohrungen 18e,118e als auch die Betätigungsbolzen können hinsichtlich ihrer Oberflächenbeschaffenheit eine Riffelung aufweisen, damit ein Herabgleiten in halb ausgebautem Zustand des Spanneinsatzes von der Wechselvorrichtung vermieden wird.

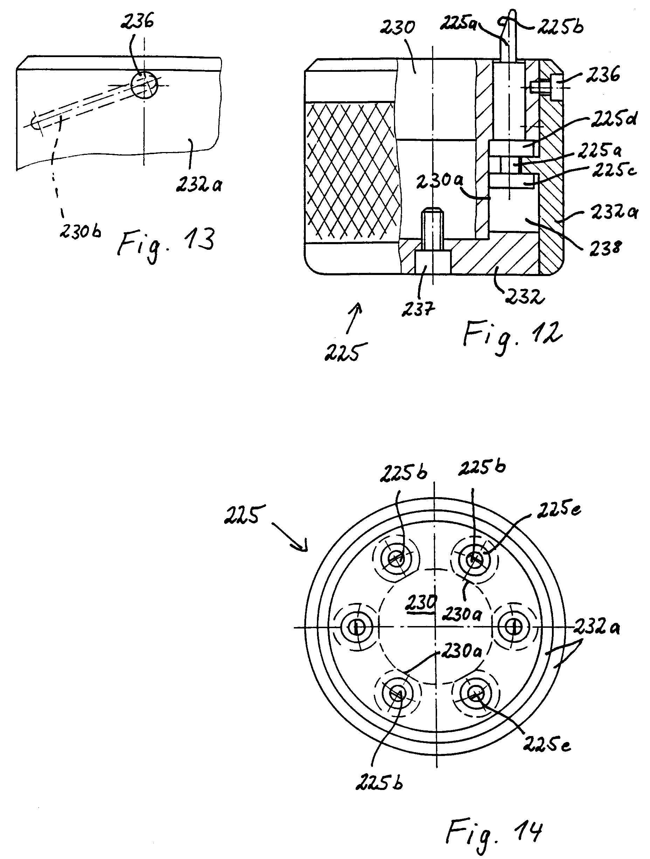

Die Fign. 7-14 zeigen drei verschiedene Ausführungsbeispiele der Wechselvorrichtung. Gleiche Teile sind mit grundsätzlich gleichen Bezugszeichen versehen, wobei jeweils die Nummer der Bezugszeichen beim zweiten Ausführungbeispiel der Fign. 9-11 gegenüber dem ersten Ausführungsbeispiel der Fign. 7 und 8 um 100 und beim dritten Ausführungsbeispiel der Fign. 12-14 gegenüber dem ersten Ausführungsbeispiel um 200 erhöht sind.

Beim Aufbau der Wechselvorrichtung nach dem ersten Ausführungsbeispiel besitzt die Wechselvorrichtung 25 in ihrem Zentrum einen Lagerabschnitt 30. An diesem Lagerabschnitt stützen sich über Federn 33 Lagerkörper 29 für die Betätigungsglieder 25a ab. Im Zentrum des Lagerabschnittes 30 ist ein Gewindebolzen mit diesem Lagerabschnitt verbunden. Mit dem Gewinde des Gewindebolzens steht eine Mutter 32 über einen Flansch in Verbindung. Die Mutter 32 dient als Handrad, kann jedoch als Kurbel oder etwas ähnliches ausgebildet werden. In ihrem vorderen Bereich besitzt die Mutter 32 Schrägflächen 32a, die mit Schrägflächen 29a des Lagerkörpers zusammenarbeiten. Zur Betätigung der Wechselvorrichtung wird diese in die Bohrungen 18e mit den Betätigungsgliedern 25a eingeführt. Sodann erfolgt ein Anziehen der Mutter, was zu einer Axialverschiebung der Mutter 32 führt. Aufgrund der korrespondierenden Schrägflächen 29a, 32a wird der Lagerkörper 29 radial nach innen gegen die Kraft der Feder 33 verschoben. Dadurch erfolgt eine Parallelverschiebung von Betätigungsglied und Spanneinsatz nach innen, bis das Kupplungselement 18g,118g an dem Vorsprung 15f des Spannkopfes problemlos vorbeigeführt werden kann. Der Lagerabschnitt 30 besitzt einen Anschlag, auf den der jeweilige Lagerkörper 29 aufläuft, wobei in dieser Stellung für den Benutzer die Gewißheit besteht, daß die Entnahme des Spanneinsatzes 18 möglich ist. Falls die Kraft der Feder 33 insbesondere für die Rückbewegung des Spanneinsatzes nicht ausreichen sollte, kann eine weitere Feder vorgesehen werden, die zwischen dem Flansch der Mutter 32 und dem Lagerabschnitt 30 angreift.

In der zweiten Ausführungsform der Wechselvorrichtung 125 entspricht die Kappe 132 der Mutter 32, die jedoch bei der Drehewegung nicht axial bewegt wird. Auch die Wechselvorrichtung 125 besitzt einen Lagerabschnitt 30, gegenüber dem sich über Federn 33 die Lagerkörper 129 abstützen. Diese Lagerkörper sind mit den Betätigungsgliedern 125a versehen, und mit dem Lagerabschnitt 30 ist ein Haltebolzen 131 verbunden, an dem die Kappe 132 drehbeweglich gelagert ist. Aus Fig. 11 wird die Wirkungsweise dieser Wechselvorrichtung 125 deutlich. Die Kappe 132 besitzt an ihrer inneren Wandung Flächen, die als Kurven 132a ausgebildet sind. Bei der Drehbewegung wird nach Fig. 11 die Kurve enger und bewegt dadurch die Lagerkörper nach innen. Vorzugsweise wird eine Kurvenzunahme im Bereich der Selbsthemmung gewählt, so daß ein sicherer Halt gewährleistet ist. Die Betätigungsglieder 125a sind am Lagerkörper 129 mit einem Halteteil 129c in Führungen 129b gehalten. Auch hier kann ein Anschlag wie im ersten Ausführungsbeispiel vorgesehen werden.

In den Fign. 12-14 ist eine weitere Ausführungsform der Wechselvorrichtung dargestellt. Bei dieser Wechselvorrichtung 225 erfolgt keine Radialverschiebung der Betätigungsglieder 225a. Hier sind die Betätigungsglieder 225a an einem Lagerabschnitt 230 gehalten. Der Lagerabschnitt steht über einen Verbindungsbolzen 237 mit der hier zweiteiligen Kappe 232 in Verbindung. Die Wandung 232a der Kappe 232 ist von Führungselementen 236 durchgriffen, die an Führungen 230b des Lagerabschnitts 230 auf einer Kurve geführt sind. Bei der Relativbewegung zwischen dem mit der Kappe 232 verbundenen Lagerabschnitt 230 und der Wandung 232a gleiten diese Führungselemente auf den Führungen, wobei die Bolzen 225a axial bis zu einem Anschlag bewegt werden. Ein mit dem Betätigungsglied 225a einstückiger Halter 225e läuft in den Bewegungsraum 238 bis zum Anschlag auf, wobei der Halter an zwei Bunden 225c,225d an einem Vorsprung der Wandung 232a anliegt. Infolge der axialen Bewegung wird das Betätigungsglied in die Bohrungen 18e,118e hineingeführt, während sich die Wandung unter gleichzeitiger Drehung entlang den Führungen 230a nach vorne bewegt. Zu Beginn dieser Bewegung taucht die Spitze des Betätigungsgliedes 225a am radial innen gelegenen Rand der Bohrung in die Bohrung 18e ein. Dabei liegt die Schrägfläche 225b an der Bohrung an. Entlang der Schrägfläche wird der Stift in die Bohrung geführt, wodurch die Spannbacke 18a,118a radial nach innen bewegt wird, bis eine Entnahme des Spanneinsatzes möglich ist. Wie in Fig 14 zu erkennen, liegen die Betätigungsglieder 225a an Abflachungen 230a des Lagerabschnittes 230 an, so daß sie beim Einführen nicht ausweichen können.

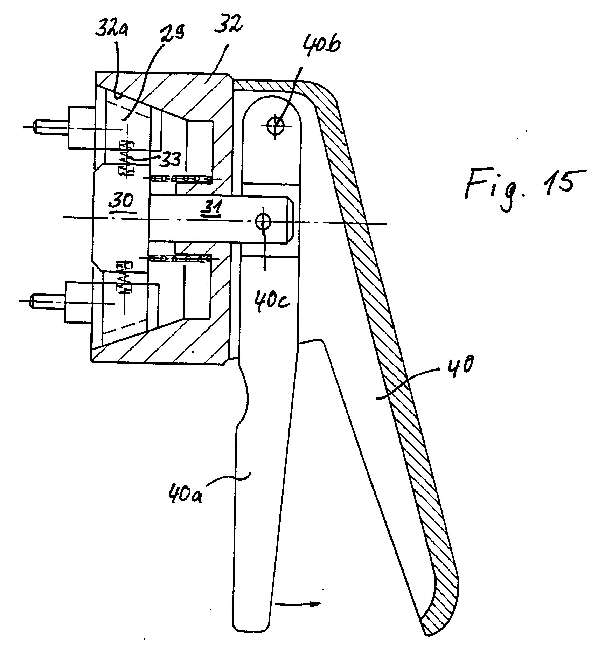

Die Wechselvorrichtung kann nach Fig. 15 an einer Zange 40 angeordnet werden. Die Zange besitzt einen um den Drehpunkt 40b beweglichen Bügel 40a und ist im übrigen fest mit der Wechselvorrichtung verbunden. Der Bügel 40a ist über Drehpunkt 40c hier mit dem Gewindebolzen 31 verbunden, kann aber auch mit einem anderen axial beweglichen Element verbunden sein. Bei Betätigung zieht der Bügel 40b den Gewindebolzen, wodurch die Lagerkörper 29 an Flächen der Mutter 32 oder der Kappe nach innen laufen. Durch eine einzige Bewegung kann ent koppelt werden.

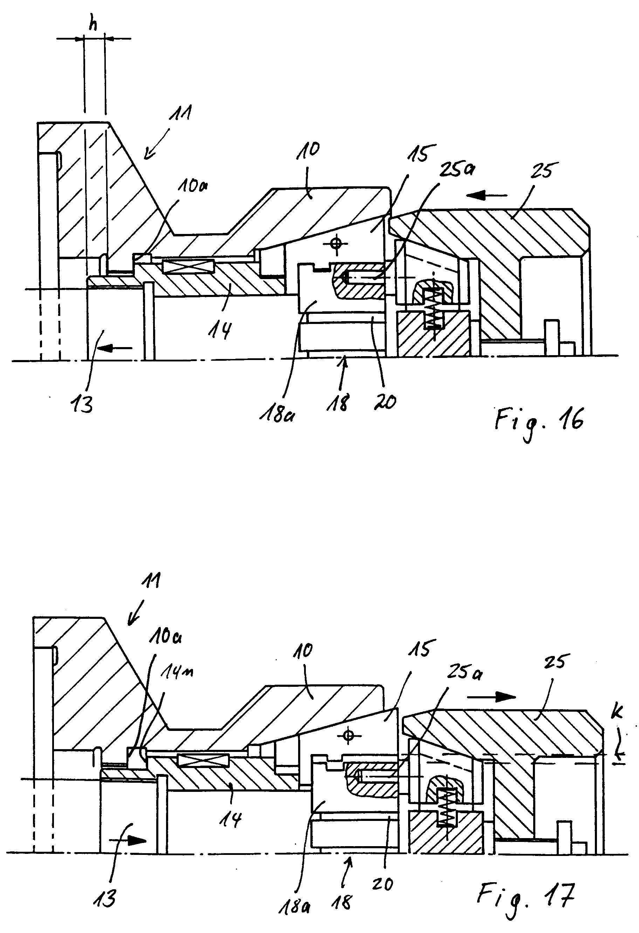

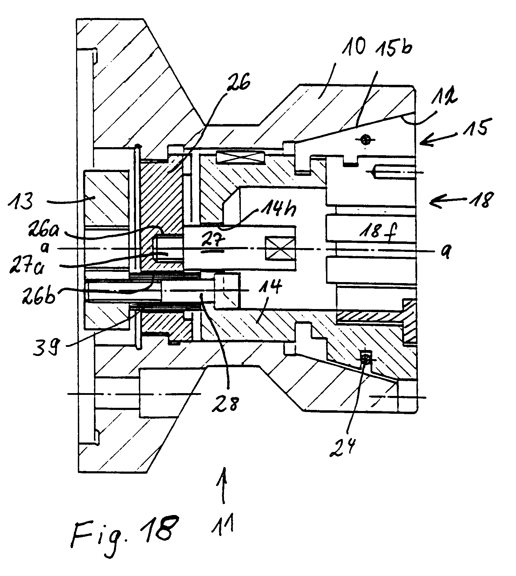

In den Fig. 16, 17 wird der Wechselvorgang durch die Betätigungseinrichtung selbst ausgelöst. Dazu wird das Zugstück bis zur Berührung von Anschlag 14n des Zugstückes am Anschlag 10 a um einen Lösehub h zurückgefahren. In dieser Stellung wird in der Fig. 16 eine Wechselvorrichtung in Bohrungen der Spannbacken 18a eingesetzt. Durch die Wechselvorrichtung wird die durch den Lösehub ausgelöste Radialverschiebung der Spannbacken fixiert. Sobald die Betätigungseinrichtung wieder zurückgestellt wird, wird der Kupplungsweg k frei, so daß der Spanneinsatz entnommen werden kann. Statt einer Wechselvorrichtung kann ein zeichnerisch nicht dargestelltes Halteelement die Betätigungsglieder 25a starr aufnehmen, so daß die einzige Radialbewegung von der Betätigungseinrichtung ausgelöst wird. Dieses Halteelement kann bis zum nächsten Einsatz am Spanneinsatz verbleiben.

In Fig. 18 ist der Umbau des in Fig. 1 dargestellten Durchgangsfutters in ein Anschlagfutter dargestellt. Das Spannfutter besitzt dazu in seinem Futterkörper 10 einen Halter 26, der über eine zentrische Gewindebohrung 26a verfügt, in der ein Anschlag 27 mit einem Gewindeabschnitt 27a einsetzbar ist. Der Halter 26 wird von Verbindungsbolzen 28 in Bohrungen 26b durchgriffen, die der Verbindung vom Zugstück 14 mit der Zugeinrichtung 13 dienen und in Distanzringen 39 gelegen sind. In der Mitte besitzt das Zugstück eine zentrische Bohrung 14h, die vom Anschlag 27 durchgriffen ist. Der Halter 26 ist über eine Gewindeverbindung mit einem Flansch des Futterkörpers 10 verbunden. Statt dieses Gewindes können eine oder mehrere Verbindungsschrauben vorgesehen werden, die in einen vergrößerten Flansch des Futterkörpers oder in radial weiter außen angeordneten Bereichen eingeschraubt werden.

Zumindest die Zugeinrichtung 13, das Zugstück 14, der Spannkopf 15, der Spanneinsatz 18, der Halter 26, der Anschlag 27, der Verbindungsbolzen 28 und der Distanzring 39 können nach vorne aus dem Futterkörper entnommen werden.

## Patentansprüche

1. Spannfutter für Werkzeugmaschinen mit einem Futterkörper (10) mit gegenüber der Längsachse (a-a) des Spannfutters (11) um einen gewissen Winkel geneigten Führungsflächen (12) sowie mit einem mit einer Betätigungseinrichtung zusammenarbeitenden Spannkopf (15) mit radial verschiebbaren Segmenten (Druckbacken 15a), die zur gemeinsamen Bewegung über Gegenführungsflächen (15b) mit den Führungsflächen (12) des Futterkörpers (10) zusammenarbeiten und infolge einer durch die Betätigungseinrichtung ausgelösten Konusspannung eine Spannwirkung auf eine axiale Aufnahmeöffnung (16) für ein Werkstück ausüben,
dadurch gekennzeichnet, daß der Spannkopf (15) mit einem abnehmbaren Spanneinsatz (18, 118) versehen ist, der mit diesem zur Spannbewegung formschlüssig verbunden ist und seinerseits über radial verschiebbare und miteinander elastisch verbundene Spannsegmente (Spannbacken 18a, 118a) verfügt, die mit den Segmenten (Druckbacken 15a) des Spannkopfes (15) an der Mantelfläche (18b, 118b) des Spanneinsatzes in Verbindung stehen.

2. Spannfutter nach Anspruch 1, dadurch gekennzeichnet, daß der Winkel, den die äußere Mantelfläche (18b, 118b) des Spanneinsatzes (18, 118) mit der Längsachse (a-a) des Spannfutters (11) einschließt, kleiner als oder entgegengesetzt zu dem Winkel ist, den die Führungsflächen (12) mit dieser Längsachse (a-a) einschließen.

3. Spannfutter nach Anspruch 1 oder 2, dadurch gekennzeichnet, daß die als Druckbacken (15a) ausgebildeten Segmente und die Spannbacken (18a,118a) an axialen Ausnehmungen (14a) eines mit der als Zugeinrichtung (13) ausgebildeten Betätigungseinrichtung in Verbindung stehenden Zugstückes (14) und/oder die Spannbacken (18a,118a) des Spanneinsatzes (18,118) zwischen elastischen Verbindungselementen (20) an Führungsflächen (18m,118m) von radialen Ausnehmungen (14m in Fig. 4) des Zugstückes (14) in Umfangsrichtung geführt sind.

4. Spannfutter nach einem der vorhergehenden Ansprüche, dadurch gekennzeichnet, daß die Druckbacken (15a) im Spannkopf (15) und die Spannbacken (18a,118a) im Spanneinsatz (18,118) in zur Vorderseite des Spannfutters (11) offenen Ausnehmungen (14a) bzw. Verbindungsbereichen (18d,118d) angeordnet sind, wobei zumindest die Spannbacken (18a,118a)) mit den Druckbacken (15a) über Kupplungselemente (18g, 118g) verbindbar sind.

5. Spannfutter nach einem der vorhergehenden Ansprüche, dadurch gekennzeichnet, daß die Druckbacken (15a) des Spannkopfes (15) über Vorsprünge (15e) in Arbeitsstellung formschlüssig mit entsprechend ausgerichteten Verschlußnasen (14b) des Zugstückes (14) verbunden sind.

6. Spannfutter nach einem der vorhergehenden Ansprüche, dadurch gekennzeichnet, daß die zwischen den Spannbacken (18a) angeordneten elastischen Verbindungselemente (20) mit einem stirnseitigen Dichtungsflansch (20a) den Spalt zwischen Spanneinsatz (18) und Zugstück (14) überdecken, wobei wenigstens das Zugstück (14) über eine entsprechende Ausnehmung (14c) zur Aufnahme des Dichtungsflansch (20a) verfügt.

7. Spannfutter nach einem der Ansprüche 1-5, dadurch gekennzeichnet, daß die Spannbacken (118a) an wenigstens einem Punkt über elastische, vorzugsweise metallische Federelemente (34,35) miteinander verbunden sind, an denen die Spannbacken vorzugsweise in festen Abständen gehalten sind und daß der Spanneinsatz (118) stirnseitig vorzugsweise metallische Dichtsegmente (19) aufweist, die an den Spannbacken (118a) gehalten sind.

8. Spannfutter nach einem der vorhergehenden Ansprüche, dadurch gekennzeichnet, daß zwischen den Druckbacken (15a) am Futterkörper (10) eine Abdichtung (21) vorgesehen ist, die über eine zylindrische Innenfläche (21a) an zylindrischen Endabschnitten (14e) des Vorderteils (14d) des Zugstückes (14) anliegt.

9. Spannfutter nach einem der vorhergehenden Ansprüche, dadurch gekennzeichnet, daß die Druckbacken (15a) des Spannkopfes über ein elastisches Element, wie z.B. einen Federring (24) miteinander in Verbindung stehen, der vorzugsweise die Druckbacken (15a) durchgreift und an einer Ausnehmung (14g) am Vorderteil (14d) des Zugstückes (14) anliegt.

10. Spannfutter nach einem der vorhergehenen Ansprüche, dadurch gekennzeichnet, daß die Spannbacken (18a,118a) des Spanneinsatzes (18,118) beim Wechseln über einen Weg auskuppelbar sind, der multipliziert mit dem Tangens des Winkels des Futterkörpers (10) größer ist als der Kupplungsweg (k) zwischen Druckbacke (15a) und Spannbacke.

11. Spannfutter nach Anspruch 10, dadurch gekennzeichnet, daß die Spannbacken (18a, 118a) des Spanneinsatzes (18,118) gegen die Kraft von elastischen Verbindungselementen (20) und/oder Federelementen (34,35) durch eine Wechselvorrichtung (25,125,225) zum Abkuppeln des Spanneinsatzes (18,118) vom Spannkopf (15) parallel zur Längsachse (a-a) bewegbar sind.

12. Spannfutter nach Anspruch 11, dadurch gekennzeichnet, daß der Spanneinsatz (18,118) über vorzugsweise in den Spannbacken (18a,118a) mündende, zur Vorderseite des Spanneinsatzes (18,118) offene Bohrungen (18e,118e) verfügt, in die korrespondierende Betätigungsglieder (25a,125a,225a) der Wechselvorrichtung einsetzbar sind.

13. Spannfutter nach einem der Ansprüche 10-12, dadurch gekennzeichnet, daß Betätigungsglieder (25a) an der Wechselvorrichtung (25) an Lagerkörpern (29) eines Lagerabschnittes (30) befestigt sind, der vorzugsweise in einer Gewindebohrung einen Gewindebolzen (31) aufnimmt, auf dem eine Mutter (32) axial bewegbar ist, und daß die Lagerkörper (29) wenigstens gegen die Kraft radial angeordneter Federn (33) gegen den Lagerabschnitt (30) abgestützt sind und eine äußere Schrägfläche (29a) aufweisen, die beim Abkuppeln an einer Schrägfläche (32a) der Mutter (32) gegen die Kraft der Feder (33) radial nach innen läuft.

14. Spannfutter nach einem der Ansprüche 10-12, dadurch gekennzeichnet, daß die Betätigungsglieder (125a) an der Wechselvorrichtung (125) an Lagerkörpern (129) gehalten sind, die an Flächen der Kappe (132) radial nach innen bewegbar sind.

15. Spannfutter nach einem der Ansprüche 10-14, dadurch gekennzeichnet, daß das Betätigungsglied (225a) eine Schrägfläche (225b) besitzt, die bei axialer Bewegung des Betätigungsgliedes (225a) die radiale Bewegung der Spannbacke (18a,118a) bewirkt.

16. Spannfutter nach einem der Ansprüche 10-15, dadurch gekennzeichnet, daß die Wechselvorrichtung an einer Zange (40) angeordnet ist, die bei Betätigung die Lagerkörper (29) relativ zur Mutter (32) oder Kappe in axialer Richtung bewegt und aufgrund der Schrägflächen oder Flächen radial nach innen bewegt.

17. Spannfuter nach Anspruch 10, dadurch gekennzeichnet, daß die Spannbacken (18a,118a) von der Betätigungseinrichtung in eine Stellung überführbar sind, in der der Spanneinsatz (18,118) fixierbar ist und vorzugsweise ohne Radialbewegung der Spannbacken aus dem Spannkopf (15) entnehmbar ist, sobald die Betätigungseinrichtung in die Ausgangsstellung rückgeführt ist.

18. Spannfutter nach Anspruch 17, dadurch gekennzeichnet, daß fest an einem Halteelement angeordnete Betätigungsglieder in Bohrungen (18e,118e) des Spanneinsatzes einführbar sind und Halteelement und Spanneinsatz gemeinsam lagerbar sind.

19. Spannfutte rnach einem der vorhergehenden Ansprüche, dadurch gekennzeichnet, daß im Futterkörper (10) ein Halter (26) angeordnet ist, der über eine zentrische Gewindebohrung (26a) verfügt, in der ein Anschlag (27) mit einem Gewindeabschnitt (27a) einsetzbar ist.

20. Spannfutter nach Anspruch 19, dadurch gekennzeichnet, daß der Halter (26) Bohrungen (26b) besitzt, die von Verbindungsbolzen (28) zur Verbindung von Zugstück (14) und Zugeinrichtung (13) durchgriffen sind, und daß das Zugstück (14) eine zentrische Bohrung (14h) besitzt, die vom Anschlag (27) durchgriffen ist, und daß der Halter (26) über wenigstens eine Verbindungsnut, vorzugsweise eine Gewindeverbindung mit dem Futterkörper (10) verbunden ist.
